# EUROPEAN PATENT APPLICATION

(11) **EP 1 070 605 A2**
(43) Date of publication of application: **24.01.2001**
(21) Application number: 00200786.2
(22) Date of filing: 06.03.2000
(51) Int. Cl.: B60B 29/00

(54) **Assisting tool for mounting a tire wheel and method for mounting the tire wheel using the assisting tool**

(30) Priority: 22.07.1999 JP 545799 U
(71) Applicant: Murakami Tire CO., Ltd., Fukuoka City 810-0014 (JP)
(72) Inventor: Murakami, Koichi, Fukuoka City 810-0014 (JP)
(74) Representative: Lucas, Brian Ronald

(57) **Abstract**

An assisting tool (1) for mounting a tire wheel having a tire on a circumferential surface thereof on a hub (3) which is connected to an axle, the assisting tool (1) comprising: a rod-like main body (11); and a threaded portion (12) formed from one end of the main body to the nearest one end of the assisting tool, wherein: the threaded portion (12) can be engaged with a bolt hole (4) formed in the hub, and the main body can be inserted through a bolt insertion hole (6) formed in the tire wheel (5). By using the assisting tool, to install tire and wheel combinations on a vehicle can be done more easily.

## Description

### BACKGROUND OF THE INVENTION

### 1. FIELD OF THE INVENTION:

The present invention relates to an assisting tool for mounting a tire wheel, in order to install tire and wheel combinations for a driving vehicle to the vehicle body, and a method for mounting the tire wheel using the assisting tool.

### 2. DESCRIPTION OF THE RELATED ART:

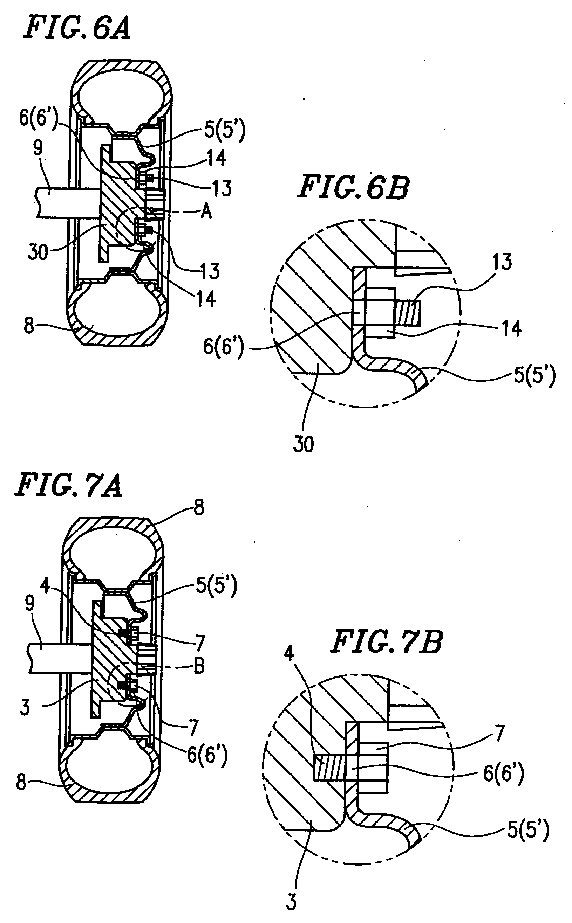

Figure **6A** illustrates a tire wheel mounted structure for a vehicle having a hub that requires lug nuts for mounting. In this tire mounted structure, a hub **30** is connected to an axle **9** of a vehicle, and a tire wheel **5** having a tire **8** on a circumferential surface thereof is mounted on the hub **30** by bolts **13** and nuts **14**. The structure will now be described in detail.

A plurality of bolts **13** are projected along an outer periphery of a side surface of the hub **30**. A plurality of bolt insertion holes **6** are formed in positions of the tire wheel **5** corresponding to those of the bolts **13** of the hub **30**. The bolts **13** which are projected from the hub **30** are inserted through the bolt insertion holes **6** of the tire wheel **5**, thereby the tire wheel **5** is secured to the hub **30** by the nuts **14** which are engaged with the bolts **13**.

The tire **8** of a vehicle having the structure as described above is typically changed according to the following method, which will be described with reference to Figure **6B**. Figure **6B** is an enlarged view of section A of Figure **6A**.

After the tire **8** (Figure **6A**) is brought out of contact with the ground by jacking up the vehicle, the nut **14** is removed from the bolt **13** which is fastened to the hub **30**, and the tire wheel **5** is detached from the hub **30** while the tire wheel **5** is lifted up manually. Next, a tire wheel **5'** is lifted up manually, and the bolt **13** is inserted through the bolt insertion hole **6'** of the tire wheel **5'**, so as to engage the bolt **13** with the nut **14**, thereby fastening the tire wheel **5'** to the hub **30**.

Thus, once the bolt **13** is inserted through the bolt insertion hole **6'** of the tire wheel **5'**, there is no need for the operator to keep holding the tire wheel **5'**, thereby to install tire and wheel combinations on the vehicle can be done easily.

However, for a vehicle having a hub that requires lug bolts for mounting, which has a tire wheel mounted structure as illustrated in Figure **7A**, the tire and wheel combinations installing operation is different from what is described above.

In this tire wheel mounted structure, the tire wheel **5** is mounted on the hub **3** as described below with. reference to Figure **7B**. Figure **7B** is an enlarged view of section B of Figure **7A**. A bolt hole **4** for receiving a fastening bolt **7** is drilled in the hub **3**. In a state where a position of the bolt insertion hole **6** of the tire wheel **5** is matched to that of the bolt hole **4**, the fastening bolt **7** is passed through the bolt insertion hole **6** so as to be engaged with the bolt hole **4** of the hub **3**. Therefore, in this tire and wheel combinations installing operation, an operator needs to keep lifting up the tire wheel **5** while keeping the positions of the bolt holes **4** matched with those of the bolt insertion holes **6** so as to insert the fastening bolts **7** through the holes 4 and 6. This operation is very difficult even for an operator who has much experience in installing tire and wheel combinations on vehicles. Therefore, it is substantially impossible for an operator who has little experience to install tire and wheel combinations on vehicles unaided. Moreover, when engaging the fastening bolt **7** with the bolt hole **4**, there is an undesirable possibility of damaging threads of both the fastening bolt **7** and the bolt hole **4**.

### SUMMARY OF THE INVENTION

According to one aspect of the invention, an assisting tool, for mounting a tire wheel having a tire on a circumferential surface thereof on a hub which is connected to an axle, includes a rod-like main body, and a threaded portion formed from one end of the main body to the nearest one end of the assisting tool, wherein the threaded portion can be engaged with a bolt hole formed in the hub, and the main body can be inserted through a bolt insertion hole formed in the tire wheel.

In one embodiment of the invention, when the threaded portion is engaged with the bolt hole of the hub, the main body is projected out from a side surface of the hub through the bolt insertion hole of the tire wheel so as to allow the tire wheel to be suspended while the main body is inserted through the tire wheel.

According to another aspect of the invention, a method for mounting a tire wheel having a tire on a circumferential surface thereof on a hub which is connected to an axle, using an assisting tool including a rod-like main body and a threaded portion formed from one end of the main body to the nearest one end of the assisting tool is provided. The threaded portion can be engaged with a bolt hole formed in the hub, and the main body can be inserted through a bolt insertion hole formed in the tire wheel. The hub has a plurality of bolt holes, and the tire wheel has a plurality of insertion holes at positions matching the positions of the bolt holes of the hub. The method includes the steps of:
engaging each of at least two of the plurality of bolt holes of the hub with the threaded portion of each assisting tool, thereby projecting the assisting tool from a side surface of the hub;
inserting the main body through the bolt insertion hole of the tire wheel, thereby suspending the tire wheel;
moving the tire wheel toward the hub along the assisting tool, thereby matching the bolt insertion hole with the bolt hole:
inserting a fastening bolt through each of the bolt insertion holes of the tire wheel, thereby engaging the fastening bolt with each of the rest of the plurality of bolt holes of the hub;
disengaging each assisting tool from the hub, thereby exposing each of the at least two bolt holes; and
inserting the fastening bolt through each of the plurality of bolt insertion holes of the tire wheel, thereby engaging the fastening bolt with each of the bolt holes exposed.

According to the present invention, when a threaded portion of an assisting tool is engaged with a bolt hole of a hub, the assisting tool is projected out from a side surface of the hub through a bolt insertion hole of a tire wheel so as to allow the tire wheel to be suspended while the assisting tool is inserted. In this state, fastening bolts are inserted through the rest of the bolt insertion holes so as to be engaged with the rest of the bolt holes, thereby securing the tire wheel to the hub.

Therefore, by using the assisting tool of the present invention, the tire and wheel combinations installing operation is facilitated even for a vehicle having a hub that requires the lug bolts for mounting as illustrated in Figure **7**. Moreover, since the positions of the bolt insertion holes of the tire wheel and those of the bolt holes of the hub can be matched precisely, it is possible to prevent the threads of the bolt holes and the fastening bolts from being damaged.

Thus, the invention described herein makes possible the advantages of providing an assisting tool for mounting a tire wheel facilitating a tire and wheel combinations installing operation and a method for mounting the tire wheel using the assisting tool.

These and other advantages of the present invention will become apparent to those skilled in the art upon reading and understanding the following detailed description with reference to the accompanying figures.

### BRIEF DESCRIPTION OF THE DRAWINGS

Figure **1** is a front view illustrating an assisting tool according to the present invention.
Figure **2** illustrates an engagement state of the assisting tool of the present invention with a bolt hole of a hub.
Figure **3** is a perspective view illustrating a state where two assisting tools are attached to the hub.
Figure **4** is a perspective view illustrating a state where a tire wheel is attached to the hub.
Figure **5** is a perspective view illustrating a state where the tire wheel is secured to the hub by a fastening bolt after the operation described in Figure **4**.
Figure **6A** is a cross-sectional view illustrating a conventional tire and wheel combinations installing operation for a vehicle having a hub that requires lug nuts for mounting, and Figure **6B** is an enlarged view of section A of Figure **6A**.
Figure **7A** is a cross-sectional view illustrating another conventional tire and wheel combinations installing operation for a vehicle having a hub that requires lug bolts for mounting, and Figure **7B** is an enlarged view of section B of Figure **7A**.

### DESCRIPTION OF THE PREFERRED EMBODIMENTS

Hereinafter, examples of the present invention will be described.

The present invention has a structure similar to the conventional structure. Thus for the sake of convenience, Figure **7** will be used here to describe the present invention. As illustrated in Figure **7**, a plurality of bolt holes **4** are formed around a hub **3** which is connected to an axle **9**. A plurality of bolt insertion holes **6** are formed in a tire wheel **5**, having a tire **8** therearound, in positions corresponding to the bolt holes **4** of the hub **3**.

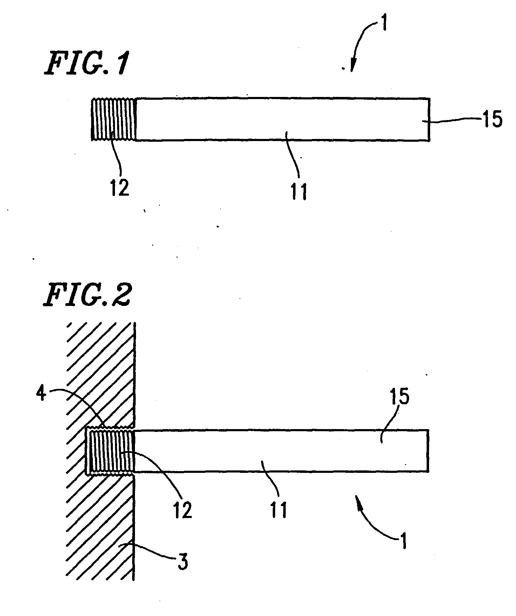

As illustrated in Figure **1**, an assisting tool **1** includes a rod-like main body **11**. The main body **11** is a cylinder which is made of metal such as, iron, stainless steel, or aluminum. The assisting tool **1** also includes a threaded portion **12** formed from one end of the main body **11** to the nearest one end of the assisting tool **1** so as to be engaged with the bolt hole **4** in the hub **3**. The main body **11** has an end portion **15** at the other end thereof.

A diameter of the main body **11** is substantially equal to or slightly smaller than the diameter of the bolt insertion hole **6** of the tire wheel **5**. Thus, it is possible to insert the main body **11** through the bolt insertion hole **6**. Specifically, the main body **11** has a diameter of, for example, about 12 to about 14 mm and a length of, for example, about 100 to about 200 mm, and the threaded portion **12** has a length of, for example, about 10 to about 20 mm.

According to the present invention, to remove and install tire and wheel combinations required due to a flat tire, etc. is done in, for example, the following method.

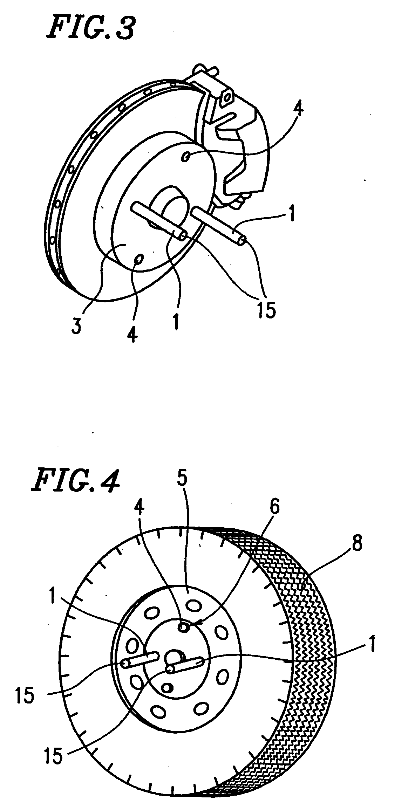

The tire wheel **5** is detached from the hub **3**. As illustrated in Figure **3**, the hub **3** has a plurality of (normally five or four) bolt holes **4** formed therein. Some of the bolt holes **4** (two in Figure **3**) are each caused to receive the assisting tool **1**. Specifically, as shown in Figure **2**, the threaded portion **12** of each assisting tool **1** is engaged with the respective bolt hole **4**. Here, as illustrated in Figure **3**, it is preferable to engage assisting tools **1** with two opposing bolt holes **4**. When the assisting tools **1** are attached to the bolt holes **4**, the end portions **15** of the assisting tools **1** are projected out from a side surface of the hub **3**.

Next, the assisting tools **1** are inserted through the bolt insertion holes **6** of the tire wheel **5**. In this case as well, the assisting tools **1** engage with two opposing bolt insertion holes **6**. By this operation, the tire wheel **5** is suspended by the assisting tools **1**. The tire wheel **5** is moved toward the hub **3** as illustrated in Figure **4**. When the tire wheel **5** abuts against the exterior of the hub **3**, the positions of the bolt insertion holes **6** of the tire wheel **5** match with those of the bolt holes **4** of the hub **3**.

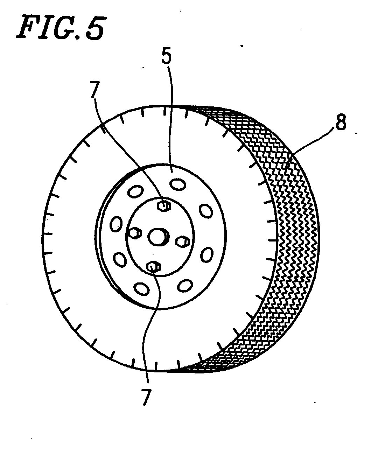

Next, as shown in Figure **5**, by inserting fastening bolts **7** through the bolt insertion holes **6** of the tire wheel **5** and the bolt holes **4** (Figure **4**), the threaded portions of the fastening bolts **7** are engaged with the bolt holes **4** of the hub **3**, thereby the tire wheel **5** is secured to the hub **3**. Thereafter, the two assisting tools **1** are disengaged from the hub **3**. Two more fastening bolts **7** are engaged with the bolt holes **4** now exposed in the same way as described above, thereby the tire wheel **5** is mounted on the hub **3**.

According to the present invention, by inserting the assisting tool **1** through the bolt insertion hole **6** of the tire wheel **5**, it is possible to match the positions of the bolt holes **4** of the hub **3** and the positions of the bolt insertion holes **6** of the tire wheel **5** precisely and automatically. Thus there is no need for an operator to lift up the tire and match the positions of the bolt insertion hole **6** of the tire wheel **5** and the bolt hole **4** of the hub **3** as in the conventional method.

Various modifications can be made for the embodiment of the assisting tool **1** without departing from the scope of the present invention. For example, diameter of the end portion **15** of the assisting tool **1** can gradually be reduced toward a tip of the end portion **15**, so that the end portion **15** can easily be inserted into the bolt insertion hole **6** of the tire wheel **5**. One part of the assisting tool **1** can have a non-circular, for example, hexagonal cross-section, so that the assisting tool **1** may more easily be attached and detached.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. An assisting tool for mounting a tire wheel having a tire on a circumferential surface thereof on a hub which is connected to an axle, the assisting tool comprising:
a rod-like main body; and
a threaded portion formed from one end of the main body to the nearest one end of the assisting tool,
wherein the threaded portion can be engaged with a bolt hole formed in the hub, and the main body can be inserted through a bolt insertion hole formed in the tire wheel.

2. An assisting tool according to claim 1, wherein when the threaded portion is engaged with the bolt hole of the hub, the main body is projected out from a side surface of the hub through the bolt insertion hole of the tire wheel so as to allow the tire wheel to be suspended while the main body is inserted through the tire wheel.

3. A method for mounting a tire wheel having a tire on a circumferential surface thereof on a hub which is connected to an axle, using at least two assisting tools each including a rod-like main body and a threaded portion formed from one end of the main body to the nearest one end of the assisting tool, wherein: the threaded portion can be engaged with a bolt hole formed in the hub; the main body can be inserted through a bolt insertion hole formed in the tire wheel, the hub has a plurality of bolt holes; and the tire wheel has a plurality of insertion holes at positions matching the positions of the bolt holes of the hub, the method comprising the steps of:
engaging at least two of the plurality of bolt holes of the hub with the threaded portions of at least two assisting tools respectively, thereby projecting the main bodies of the assisting tools from a side surface of the hub;
inserting the main bodies through at least two of the plurality of bolt insertion holes of the tire wheel, thereby suspending the tire wheel;
moving the tire wheel toward the hub along the assisting tools, thereby matching the bolt insertion holes with the bolt holes:
inserting a fastening bolt through each of the rest of the plurality of the bolt insertion holes of the tire wheel, thereby engaging the fastening bolt with each of the rest of the plurality of bolt holes of the hub;
disengaging the assisting tools from the hub, thereby exposing the at least two bolt holes; and
inserting fastening bolts through the at least two bolt insertion holes of the tire wheel, thereby engaging the fastening bolts with the at least two bolt holes exposed. 4. A kit comprising at least two assisting tools as Claimed in Claim 1 or 2, together with instructions to carry out a method according to Claim 3.
